Europäisches Patentamt

European Patent Office

Office européen des brevets

(11) Veröffentlichungsnummer: **0 285 905**
**A2**

(12) **EUROPÄISCHE PATENTANMELDUNG**

(21) Anmeldenummer: **88104598.3**

(22) Anmeldetag: **23.03.88**

(51) Int. Cl.4: **H02M 3/335**

(30) Priorität: **10.04.87 DE 3712229**
**08.12.87 DE 3741452**

(43) Veröffentlichungstag der Anmeldung:
**12.10.88 Patentblatt 88/41**

(84) Benannte Vertragsstaaten:
**AT BE CH DE ES FR GB GR IT LI LU NL SE**

(71) Anmelder: **Wandel & Goltermann GmbH & Co**
**Postfach 45 Mühleweg 5**
**D-7412 Eningen u.A.(DE)**

(72) Erfinder: **Hoffmann, Günther, Dr.-Ing.**
**Im Blankensteiner 18**
**D-7412 Eningen u.A.(DE)**

(54) **Geregelter Gleichspannungswandler.**

(57) Bei bekannten Wandlern kann eine von einer Batterie gelieferte oder durch unmittelbares Gleichrichten der Netzwechselspannung gewonnene Speisespannung, die als Eingangsspannung an einer Reihenschaltung einer Primärwicklung seines Wandlerübertragers und eines Schalttransistors liegt, in einem weiten Variationsbereich liegen. Durch die Konstantregelung der Ausgangsspannung treten dabei unterschiedliche Impulsbreiten auf. Dabei ändern sich die Konstanz mitgeführter Nebenspannungen und des Wandlerwirkungsgrades stark, was die Erfindung zu verbessern sucht.

Dem Wandlereingang wird die Summe aus der Speisespannung und einer Zusatzspannung zugeführt, die der Wandler selbst in derselben Weise wie die Hauptausgangsspannung erzeugt. Diese Zusatzspannung wird in einem Gleichrichterkreis gebildet, der von einer eigenen Sekundärwicklung oder auch von einer Primärwicklung des Wandlers gespeist wird. Auf diese Weise ergibt sich ein wesentlich geringerer Variationsbereich der Wandlereingangsspannung, wodurch geringe Impulsbreiten vermieden und der Wirkungsgrad des Wandlers sowie die Konstanz der Nebenspannungen erhöht werden.

Gleichspannungswandler, die mit stark unterschiedlichen oder schwankenden Speisespannungen betrieben werden.

Fig.1

## Geregelter Gleichspannungswandler

Die Erfindung betrifft einen Gleichspannungswandler gemäß dem Oberbegriff des Anspruchs 1.

Derartige Wandler sind z.B. aus J. WÜSTEHUBE, "Schaltnetzteile", 1982, expert verlag/VDE-Verlag, Reihe Kontakt & Studium, Bd.33, Seite 26, bekannt. Sie dienen zur Stromversorgung elektronischer Geräte und liefern auch bei stark unterschiedlicher und stark schwankender Speisespannung eine konstante Ausgangsspannung. Sie können auch für die gleichzeitige Ausgabe mehrerer Ausgangsspannungen eingerichtet werden, von denen dann eine Hauptausgangsspannung exakt konstant geregelt wird und mitgeführte Nebenausgangsspannungen von Schwankungen der Speisespannung mehr oder weniger unabhängig sind.

Der im Prinzip große Regelbereich dieser Wandler ermöglicht es, alle vorkommenden Netzspannungen (z.B. von 100 Volt bis 240 Volt) ohne Spannungsumschaltung gleichzurichten und die gleichgerichtete Netzspannung als Speisespannung an den Wandlereingang zu legen. In der Praxis sind aber der Wirkungsgrad und die Konstanz der mitgeführten Nebenausgangspannungen doch von Schwankungen der Eingangsspannung abhängig. Deshalb müssen bis heute auch moderne elektronische Geräte, die über solche Gleichspannungswandler gespeist werden, fast ausnahmslos umgeschaltet oder umgerüstet werden, wenn sie mit sehr unterschiedlichen Netzspannungen versorgt werden sollen.

Der Erfindung liegt daher die Aufgabe zugrunde, Wandler der eingangs genannten Art anzugeben, bei denen der Wirkungsgrad und die Konstanz ungeregelt mitgeführter Nebenspannungen auch bei großer Variation (z.B. 1:4) der Speisespannung befriedigen.

Diese Aufgabe wird durch die im Anspruch 1 gekennzeichneten Merkmale gelöst. Auf diese Weise werden die Variationsbereiche der am Wandlerübertrager liegenden Eingangsspannung und der Einschaltzeiten verkleinert, so daß sehr kurze Stromflußzeiten, bei denen sehr hohe Strom-Spitzenwerte auftreten würden, vermieden werden und eine wesentliche Verbesserung des Wirkungsgrades des Wandlers und der Konstanz der Nebenspannungen erzielt wird. Ist z.B. der zu bewältigende Variationsbereich der Speisespannung (z.B. der gleichgerichteten Netzspannung) 1:4 und wird die hinzukommende Zusatzspannung z.B. doppelt so groß wie die kleinste zu erwartende Speisespannung gemacht, so ist der Variationsbereich der Eingangsspannung U1 am Wandlerübertrager nur noch 2:1.

Es ist nun zwar aus W. Krumrein, "DC-Converter", in: IBM Technical Disclosure Bulletin, Vol.18, No.1, Seiten 150/151, Juni 1975, bekannt, einem Gleichspannungswandlers die Summe aus einer Speisespannung und einer im Wandler selbst durch Gleichrichten erzeugten Hilfsspannung zuzuführen. Bei diesem bekannten Eintakt-Wandler arbeitet aber ein die Ausgangsspannung erzeugender Gleichrichterkreis wie ein Durchflußwandler und ein die Hilfsspannung erzeugender Gleichrichterkreis wie ein Sperrwandler.

Aus Gb 21 52 771 A ist ein Wechselrichter bekannt, desen Stützkondensator die Summe aus einer in einem Netzgleichrichter erzeugten Speisespannung und einer Hilfsspannung zugeführt wird, die im Wandler selbst erzeugt und dabei durch gesteuerte Gleichrichtung derart variiert wird, daß die Spannung am Stützkondensator konstant bleibt.

Aus der US-PS 46 42 745 ist ein geregelter Netzgleichrichter mit einer lose gekoppelten Zusatzspannung bekannt, die sich in einem Resonanzkreis stark mit der Frequenz ändert.

Aus der US-PS 40 17 785 ist ein Speisegerät für Leuchtstofflampen mit einem Netzgleichrichter und mit einem von diesem gespeisten Hochfrequenzoszillator bekannt, bei dem ein zweiter Gleichrichterkreis eine in Reihe mit der an einem sehr klein bemessenen Ladekondensator des Netzgleichrichters liegenden und daher sehr stark - schwankenden Speisespannung liegende Hilfsspannung erzeugt.

Bei Sperrwandlern ergeben die im Anspruch 5 gekennzeichneten Mittel eine weitere Verbesserung des Wirkungsgrades. Auf diese Weise kann die Energie zurückgewonnen werden, die Takt für Takt in der Streuinduktivität des Wandlerübertragers gespeichert wird. Außerdem wird der Schalttransistor vor Überspannungen geschützt, die sonst zu Beginn seiner Ausschaltzeit von der Streuinduktivität erzeugt würden.

Eine besonders vorteilhafte Weiterbildung der Erfindung ergibt sich mit den im Anspruch 6 gekennzeichneten Mitteln. Auf diese Weise wird keine besondere Wicklung für die Erzeugung der Zusatzspannung benötigt, so daß der für die übrigen Wicklungen zur Verfügung stehende Kupferquerschnitt vergrößert und damit der Wirkungsgrad des Wandlers verbessert wird.

Bei der in Anspruch 7 gekennzeichneten Weiterbildung der Erfindung nimmt bei konstantgeregelter Ausgangsspannung die zurückgeführte Zusatzspannung ab, wenn die Speisespannung zunimmt.

Vorteilhafte Ausgestaltungen der Erfindung sind in den übrigen Unteransprüchen gekennzeichnet.

Die Erfindung wird nachstehend an Hand der in der Zeichnung vereinfacht dargestellten Ausführungsbeispiele unter Weglassen üblicher Schaltmittel zur Entlastungs u.s.w. erläutert. Hierbei zeigt jeweils in einem Prinzipschaltbild:

Figur 1 einen Eintakt-Durchflußwandler mit einer Sekundärwicklung zur Erzeugung der Zusatzspannung,

Figur 1a eine Anordnung gemäß Figur 1, bei der der Gleichrichter für die Erzeugung der Zusatzspannung an der Primärwicklung liegt,

Figur 2 einen Gegentakt-Durchflußwandler mit einer Gegentaktsekundärwicklung zur Erzeugung der Zusatzspannung

Figur 2a eine Anordnung gemäß Figur 2, bei der der Gleichrichter für die Erzeugung der Zusatzspannung an der Primärwicklung liegt,

Figur 3 einen Eintakt-Sperrwandler,

Figur 4 zwei im Gegentakt betriebene Eintakt-Sperrwandler,

Figur 5 eine Abwandlung des in Figur 3 dargestellten Eintaktsperrwandlers.

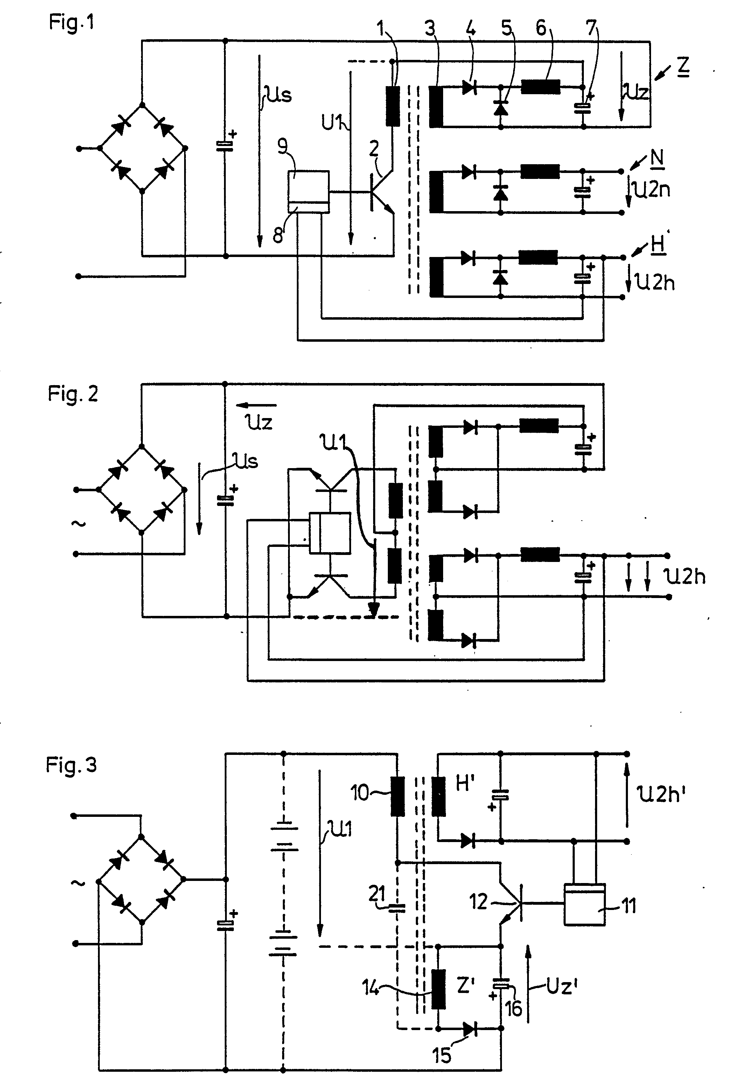

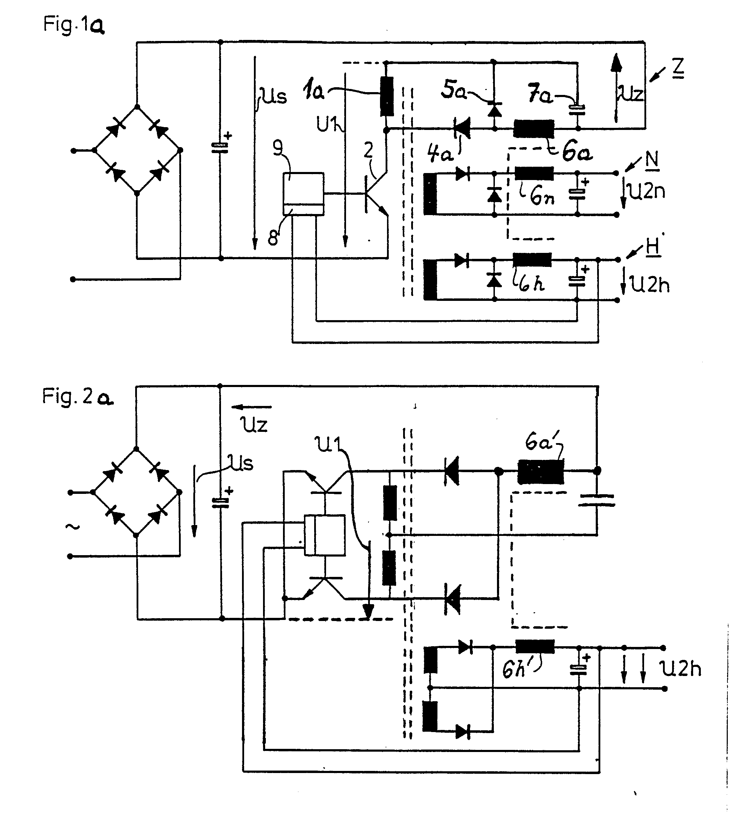

In Figur 1 ist ein vereinfachtes Schaltbild eines Eintakt-Durchflußwandlers mit Regelung dargestellt, bei dem eine Reihenschaltung einer Primärwicklung 1 seines Wandlerübertragers und eines Schalttransistors 2 an einer Wandler-Eingangsspannung U1 liegt. Diese setzt sich aus einer durch Gleichrichten der Netzwechselspannung erzeugten Speisespannung Us und einer Zusatzspannung Uz zusammen, die auf der Sekundärseite des Wandlers in einer (Z) von drei gleichartig ausgebildeten Gleichrichterschaltungen Z, N, H erzeugt wird. Jede der Gleichrichterschaltungen Z, N und H besteht aus einer Sekundärwicklung, z.B. 3, einem Gleichrichter, z.B. 4, einer Freilaufdiode, z.B. 5, einer Drossel, z.B. 6, und einem Kondensator, z.B. 7. Die Gleichrichterschaltung H erzeugt eine Hauptausgangsspannung U2h, die über eine potentialtrennende Anordnung 8 auch einem Steuerbaustein 9 zugeführt ist, der an der Basis des Schalttransistors 2 eine Pulsbreitensteuerung derart vornimmt, daß er bei zu großer Hauptausgangsspannung U2h kürzere Steuerimpulse und bei zu kleiner Hauptausgangsspannung längere Steuerimpulse abgibt. Die Gleichrichterschaltung N liefert potentialfreie Nebenausgangsspannung U2n. Die Zusatzspannung Uz ist etwa doppelt so groß wie die kleinste zu erwartende Speisespannung Us. Daher variiert die Wandler-Eingangsspannung U1 etwa nur halb so stark wie die Speisespannung Us.

Die in Figur 1a dargestellte Anordnung unterscheidet sich von der Anordnung gemäß Figur 1 im wesentlichem durch das Fehlen einer eigenen Sekundärwicklung (wie 3 in Figur 1) zur Speisung der die Zusatzspannung Uz erzeugenden Gleichrichterschaltung. Satt dessen liegt in Figur 1a die Gleichrichterschaltung 4a bis 7a unmittelbar an der Primärwicklung 1a, wobei der Gleichrichter 4a umgekehrt gepolt ist wie der Gleichrichter 4 in Figur 1, dafür aber in der anderen Zuleitung zur Primärwicklung 1a liegt und auch die Drossel 6a in entsprechender Weise in der anderen Zuleitung zum Ladekondensator 7a angeordnet ist.

Die in Figur 2 dargestellte Anordnung unterscheidet sich von der Anordnung gemäß Figur 1 im wesentlichen nur durch ihre Gegentaktausbildung. In nicht näher dargestellter ähnlicher Weise können auch hier noch eine oder mehrere Nebenausgangsspannungen erzeugt werden.

Die in Figur 2a dargestellte Anordnung unterscheidet sich von der Anordnung gemäß Figur 2 im wesentlichen ebenfalls durch das Fehlen einer eigenen Gegentakt-Sekundärwicklung zur Speisung des die Zusatzspannung Uz erzeugenden Gegentakt-Gleichrichterkreises. Auch hier ist letzterer unter Vertauschung der Polarität der Gleichrichter und Änderung der Anschlüsse im Sinne einer Hintereinanderschaltung von Uz und Us unmittelbar an der Gegentakt-Primärwicklung angeschlossen.

Bei den in den Figuren 1a und 2a dargestellten Ausführungsbeispielen ermöglicht der Wegfall einer den bzw. die Gleichrichter zur Erzeugung der Zusatzspannung speisenden Hilfswicklung eine Vergrößerung des Drahtquerschnittes der übrigen Wicklungen, die den Wirkungsgrad der Anordnung verbessert.

Bei den beiden vorgenannten Ausführungsbeispielen kann die Spannungskonstanz, auch etwa erzeugter Nebenspannungen, durch die magnetische Koppelung der in den verschiedenen Gleichrichterkreisen liegenden Drosselwicklungen wesentlich verbessert werden.

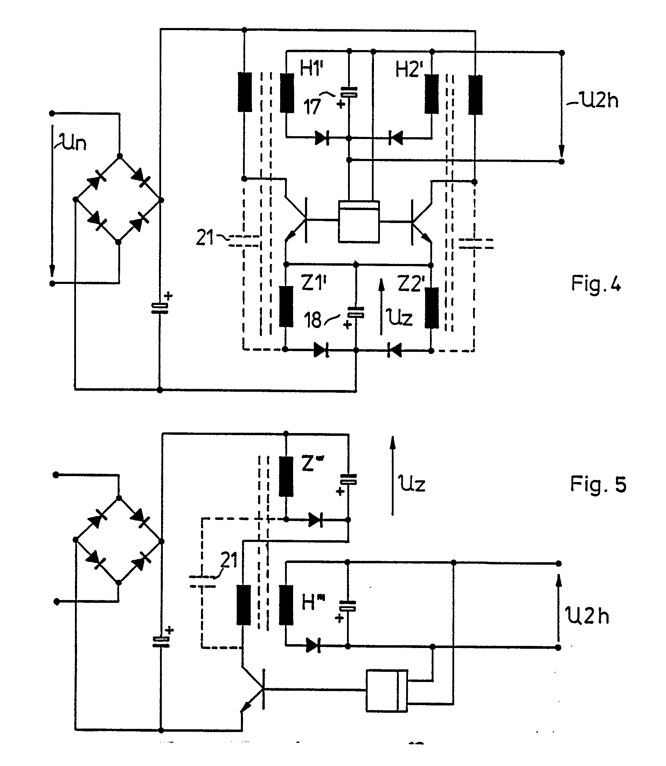

Bei dem in Figur 3 dargestellten Eintakt-Sperrwandler liegt an der Reihenschaltung einer Primärwicklung 10 und eines von einem Steuerbaustein 11 getakteten Schalttransistors 12 eine Wandler-Eingangsspannung U1, die sich aus einer Speisespannung Us, die eine Batterie 13 liefert, und einer Zusatzspannung Uz' zusammen setzt, die eine sekundärseitige Gleichrichterschaltung Z' erzeugt. Diese besteht aus einer Sekundärwicklung 14, einem Gleichrichter 15 und einem Ladekondensator 16. Eine gleichartige sekundärseitige Gleichrichterschaltung H' erzeugt eine Hauptausgangsspannung U2h'. Auf ähnliche, nicht näher dargestellte Weise könnten auch hier noch weitere Nebenausgangsspannungen erzeugt werden.

Die in Figur 4 dargestellte Anordnung unterscheidet sich von der Anordnung gemäß Figur 3 im wesentlichen nur durch ihre Verdoppelung, wobei gemeinsame Ladekondensatoren 17 bzw. 18 für sich entsprechende Gleichrichterkreise H1', H2'; Z1',Z2' der beiden Eintakt-Sperrwandler vorgesehen sind und die beiden Sperrwandler im Gegentakt angesteuert werden.

Der in Figur 5 dargestellte Eintaktsperrwandler ist gegenüber der in Figur 3 dargestellten Anordnung dahin abgewandt, daß hier der die Zusatzspannung Uz erzeugende Gleichrichterkreis Z''' mit demjenigen Ende der Primärspule verbunden ist, das von der Schaltstrecke des Schalttransistors abgewandt ist.

Bei den in den Figuren 3 bis 5 dargestellten Gleichspannungswandlern besitzen die Primärwicklungen, z.B. 10, und die Sekundärwicklungen, z.B. 14, der die Zusatzspannung Uz erzeugenden Gleichrichterkreise, z.B. Z', eine gleiche Windungszahl, und ein jeweils mit gestrichelten Linien dargestellter Ausgleichskondensator 21 ist so eingefügt, daß er die genannten Wicklungen parallelschaltet. Dadurch wird die Takt für Takt in der Stereuinduktivität des Wandlers gespeicherete Energie zurückgewonnen.

Bei allen dargestellten Ausführungsbeispielen kann die Speisespannung Us auch von einer Batterie, (z.B. 22 in Figur 3), statt von einem Netzgleichrichter (z.B. 23, 24 in Figur 1) geliefert werden.

## Ansprüche

1. Gleichspannungswandler zur Stromversorgung eines elektronischen Gerätes, der die Summe einer zugeführten Speisespannung (Us) und einer vom Wandler selbst durch Gleichrichten erzeugten Zusatzspannung in eine Hauptausgangsspannung wandelt, die durch Pulsbreitensteuerung seines die Reihenschaltung einer Primärwicklung (1) seines Wandlerübertragers und eines Schalttransistors (2) durchfließenden Primärstromes konstantgeregelt ist, dadurch gekennzeichnet, daß die Zusatzspannung (Uz) durch Gleichrichten in derselben Weise wie die Hauptausgangsspannung erzeugt wird.

2. Wandler nach Anspruch 1, dadurch gekennzeichnet, daß die Zusatzspannung (Uz) in einem von einer eigenen Sekundärwicklung (3) gespeisten Gleichrichterkreis erzeugt ist.

3. Wandler nach Anspruch 2, dadurch gekennzeichnet, daß er ein Sperrwandler ist.

4. Wandler nach Anspruch 3, dadurch gekennzeichnet, daß er zwei im Gegentakt betriebene Eintaktsperrwandler hat und daß sich entsprechende Gleichrichterkreise der beiden Wandler gemeinsame Kondensatoren besitzen.

5. Wandler nach Anspruch 3, dadurch gekennzeichnet, daß die Primärwicklung und die Sekundärwicklung des die Zusatzspannung erzeugenden Gleichrichterkreises gleiche Windungszahlen haben und daß das mit dem Schalttransistor verbundene Ende der Primärwicklung und das mit dem Gleichrichter des die Zusatzspannung (Uz) erzeugenden Gleichrichterkreises verbundene Ende der Sekundärwicklung über einen Kondensator (21) verbunden sind.

6. Wandler nach Anspruch 1, dadurch gekennzeichnet, daß er ein Durchflußwandler ist und daß die Zusatzspannung durch Gleichrichten der an der Primärwicklung (1) anstehenden Spannung erzeugt wird.

7. Wandler nach Anspruch 6, dadurch gekennzeichnet, daß in verschiedenen Gleichrichterkreisen liegende Drosselwicklungen magnetisch gekoppelt sind.

**Fig. 1**

**Fig. 2**

**Fig. 3**

Wandel & Goltermann GmbH & Co     Bl. 1 v. 3     A 269 Eu

Fig.1a

$U_s$  $1a$  $U1$  $5a$  $7a$  $U_z$  $Z$

$9$  $2$  $4a$  $6a$

$8$  $N$  $6n$  $U2n$

$H$  $6h$  $U2h$

Fig.2a

$U_z$  $U1$  $6a'$

$U_s$

$6h'$  $U2h$

Fig.4

Fig. 5